# FASCICULE DE BREVET EUROPEEN

(11) **EP 2 552 600 B1**
(45) Date de publication et mention de la délivrance du brevet: **22.05.2019**
(21) Numéro de dépôt: 11719325.0
(22) Date de dépôt: 01.04.2011
(51) Int. Cl.: B05C 7/02, B05D 7/22, B28B 19/00, B29C 47/10, F16L 9/04, F16L 57/06, F16L 58/06, B29K 105/00, B05B 13/06, B05D 1/02, B29C 47/00, B29C 47/36, B29C 47/46, B29C 67/24, C04B 26/14, C04B 26/16, F16L 58/08, F16L 58/10, F16L 9/147, B29K 105/16

(54) **PROCEDÉ DE REVÊTEMENT DE L'INTÉRIEUR D'UN ELÉMENT DE CANALISATION AVEC UN MORTIER DE RÉSINE**
VERFAHREN ZUM AUSKLEIDEN EINES INNENROHRABSCHNITTS MIT EINEM HARZMÖRTEL
METHOD OF LINING THE INTERIOR OF A PIPE WITH A RESIN MORTAR

(30) Priorité: 02.04.2010 FR 1052510
(43) Date de publication de la demande: 06.02.2013
(73) Titulaire: Saint-Gobain PAM, 21 Avenue Camille Cavallier 54700 Pont-à-Mousson (FR)
(72) Inventeur: MONNIN, Yann, F-93500 Pantin (FR); LAGES, Victoria, F-54700 Pont A Mousson (FR)
(74) Mandataire: Lavoix
(86) Numéro de dépôt international: PCT/FR2011/050737
(87) Numéro de publication internationale: WO 2011/121252

(56) Documents cités:
- CN-A- 88 105 883
- CN-Y- 2 438 902
- DE-A1- 2 640 075
- DE-A1- 3 041 973
- DE-A1- 3 429 881
- DE-A1- 19 858 554
- DE-A1-102005 054 153
- FR-A- 1 229 741
- FR-A5- 2 215 126
- JP-A- 7 224 234
- JP-A- H0 568 918
- JP-A- 2005 194 124
- US-A- 4 390 568
- US-A- 4 395 159
- US-A- 5 321 062

## Description

La présente invention concerne un procédé de revêtement de l'intérieur d'un élément de canalisation, s'étendant suivant un axe central (X-X) et comprenant :
- un corps de base en métal, définissant une surface extérieure de corps de base et une surface intérieure de corps de base, et
- un revêtement intérieur appliqué sur la surface intérieure de corps de base.

On connaît dans l'état de la technique des tuyaux de transport d'eaux usées.

Ces tuyaux comprennent un corps de base en métal sur la surface intérieure duquel est appliqué un revêtement intérieur apte à résister à des eaux ayant un pH compris entre 4 et 13. Les revêtements généralement utilisés comprennent un mortier de ciment. Ces mortiers hydrauliques risquent d'être altérés, notamment lorsque les tuyaux véhiculent des eaux agressives. Les document JPH0568918A et DE3429881A dévoilent chacun un procédé de revêtement de l'intérieur d'une canalisation utilisant un mortier de résine.

L'invention a pour but d'améliorer la durabilité et la résistance à l'abrasion du revêtement intérieur des éléments de canalisation, tels que les tuyaux ou raccords, destinés au transport des eaux usées et effluents.

A cet effet, l'invention a pour objet un procédé de revêtement de l'intérieur d'un élément de canalisation selon les caractéristiques de la revendication 1. Les modes avantageux de réalisation de l'invention font l'objet des revendications dépendantes 2 à 22.

Selon des premiers modes de réalisation particuliers de l'invention, l'élément de canalisation comporte l'une ou plusieurs des caractéristiques suivantes :
- le corps de base est en fonte, en particulier en fonte à graphite sphéroïdal ;
- la charge minérale comprend au moins un premier sous-composant de charge, et est notamment constituée de ce premier sous-composant de charge ;
- la charge minérale est constituée du premier sous-composant de charge et d'un second sous-composant de charge, ces deux sous-composants de charge ayant des granulométries différentes ;
- le premier sous-composant de charge a une granulométrie inférieure à 4 mm, notamment comprise entre 10 µm et 1 mm ; et
- le second sous-composant de charge a une granulométrie inférieure à 0,4 mm ;
- le premier sous-composant de charge constitue entre 60% et 90% en poids de la charge minérale, et le second sous-composant de charge constitue entre 40% et 10% en poids de la charge minérale ;
- la charge minérale comprend du sable siliceux sec ou silico-calcaire sec, et notamment au moins l'un des sous-composants de charge est constitué de sable siliceux sec ou silico-calcaire sec ;
- le liant organique comprend et est notamment constitué d'une résine polyépoxyde ou polyuréthane ;
- le liant organique comprend et est notamment constitué d'une résine polyépoxyde, notamment sans solvant, et la résine polyépoxyde est constituée d'un sous-composant époxyde et d'un sous-composant durcisseur ;
- le rapport en poids entre le sous-composant époxyde et le sous-composant durcisseur, à savoir époxyde/durcisseur est compris entre 100/30 et 100/60 ;
- le liant organique comprend et est notamment constitué d'une résine polyuréthane qui est constituée d'un polyol et d'un isocyanate, notamment avec un rapport en poids entre le polyol et l'isocyanate qui est compris entre 100/70 et 100/100 ;
- le rapport en poids entre la charge minérale et le liant organique est compris entre 4/1 et 7,5/1 ;
- le rapport en poids entre la charge minérale et le liant organique est compris entre 1,5/1 et 4/1 et de préférence entre 2/1 et 3/1 ;
- le mortier de résine est constitué d'une charge minérale et d'un liant organique ;
- le mortier de résine comporte des fibres de renforcement dans une proportion comprise entre 0,5% et 10% en poids par rapport au liant organique ;
- une butée adaptée pour s'opposer à un écoulement axial du mortier de résine disposé sur la surface intérieure ;
- la butée comprend un cordon annulaire disposé sur la surface intérieure, notamment un cordon de colle durcie ;
- le revêtement intérieur a une épaisseur de paroi comprise entre 2 mm et 4 mm, notamment sur toute son étendue.

Selon d'autres modes de réalisation particuliers, le procédé selon l'invention comporte l'une ou plusieurs des caractéristiques suivantes :
- mélanger un premier sous-composant du liant organique et un second sous-composant du liant organique en formant le liant organique ;
- introduire le premier sous-composant du liant organique dans la charge minérale séparément de l'introduction du deuxième sous-composant du liant organique dans la charge minérale, avant leur mélange ;
- mélanger un premier sous-composant de charge et un second sous-composant de charge en obtenant la charge minérale.

Finalement, une installation adaptée pour le revêtement d'un élément de canalisations est présentée, l'installation comprenant une tête de projection ayant un corps de base en forme de cylindre creux, notamment à section circulaire, et s'étendant selon un axe de tête, caractérisée en ce que la tête de projection comporte au moins une fenêtre de projection ayant deux côtés non parallèles.

L'installation peut comporter les caractéristiques suivantes :
- la ou chaque fenêtre de projection a une forme générale de triangle ou de quadrilatère ;
- la tête de projection comporte au moins deux fenêtres de projection, chaque fenêtre de projection ayant une portion large et une portion mince et les fenêtres de projection étant disposées de telle sorte que les portions minces et larges alternent selon la direction circonférentielle de la tête de projection ;
- la ou chaque fenêtre de projection a une forme générale de triangle isocèle ou équilatéral ;
- un dispositif de mélange adapté pour mélanger un premier sous-composant de charge et un second sous-composant de charge afin de former la charge minérale ;
- un dispositif d'introduction de liant adapté pour introduire le liant organique dans la charge minérale, le dispositif d'introduction de liant comportant un dispositif d'introduction d'un premier sous-composant du liant organique et un dispositif d'introduction d'un second sous-composant du liant organique ; et
- le dispositif d'introduction du premier sous-composant du liant organique et le dispositif d'introduction du second sous-composant du liant organique sont adaptés pour introduire le premier sous-composant du liant organique et le second sous-composant du liant organique séparément l'un de l'autre ; et
- le dispositif d'introduction de liant est adapté pour introduire le liant organique dans la charge minérale suivant une direction ayant une composante perpendiculaire au sens de transport (T) de la charge, et notamment suivant une direction perpendiculaire à ce sens de transport (T).

L'invention sera mieux comprise à la lecture de la description qui va suivre, donnée uniquement à titre d'exemple et faite en se référant aux dessins annexés, sur lesquels :
- la Figure 1 est une vue en coupe longitudinale d'un élément de canalisation ou tuyau obtenu par le procédé selon l'invention;
- la Figure 2 est une vue schématique d'une installation de revêtement d'un tuyau selon l'invention ;
- la Figure 3 est une vue axiale de la tête de projection de l'installation de la Figure 2 ;
- la Figure 4 est une vue en coupe transversale de la tête de projection selon un premier mode de réalisation ;
- la Figure 5 est une vue développée de la surface enveloppante de la tête de projection de la Figure 4 ;
- les Figures 6 et 7 sont des vues analogues à celles des Figures 4 et 5 d'un second mode de réalisation de la tête de projection ; et
- les Figures 8 et 9 sont des vues analogues à celles des Figures 4 et 5 d'un troisième mode de réalisation de la tête de projection.

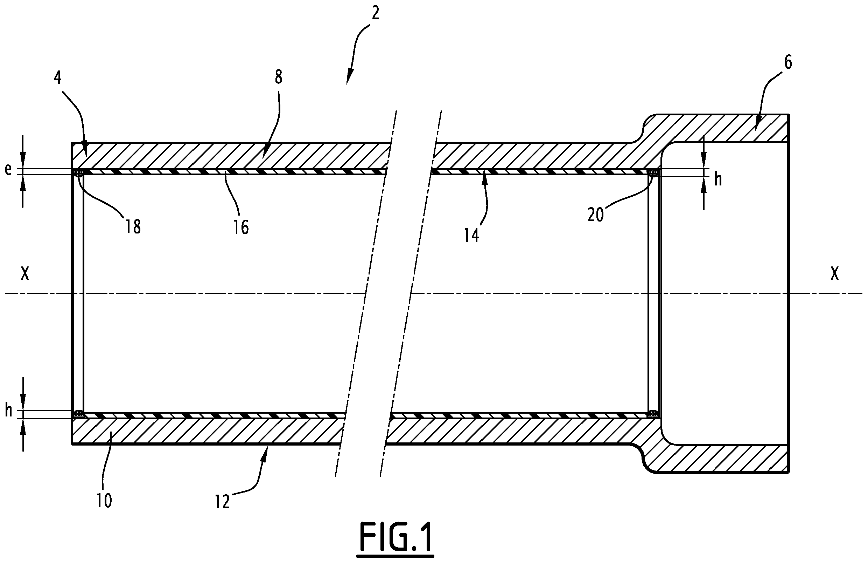

Sur la Figure 1 est représenté un tuyau obtenu par le procédé l'invention, désigné par la référence générale 2.

Ce tuyau 2 s'étend selon un axe central X-X. Dans ce qui suit et sauf indication contraire, les termes « axialement », « radialement » et « circonférentiellement » seront utilisés par rapport à l'axe central X-X.

Le tuyau 2 comporte un bout uni 4, un bout à emboîtement 6 et une partie intermédiaire 8 s'étendant entre le bout uni 4 et le bout à emboîtement 6.

Le tuyau 2 est muni d'un corps de base 10, fabriqué par exemple en fonte, et notamment en fonte à graphite sphéroïdal. Ce corps de base 10 définit une surface extérieure 12 de corps de base et une surface intérieure 14 de corps de base.

La surface extérieure 12 est revêtue d'un revêtement extérieur anticorrosion non représenté, par exemple à base de zinc.

Le tuyau 2 comporte en outre un revêtement intérieur 16 appliqué sur la surface intérieure 14 de la partie intermédiaire 8 et du bout uni 4. Le bout à emboîtement 6 est dépourvu du revêtement intérieur 16.

Le revêtement intérieur 16 a de préférence une épaisseur de paroi e comprise entre 2 mm et 4 mm, notamment sur toute son étendue.

Le revêtement intérieur 16 est en une matière permettant au tuyau 2 de transporter des eaux usées ayant un pH qui est compris entre 4 et 13 et qui peut ponctuellement être inférieur à 4.

A cet effet, le revêtement intérieur 16 comprend un mortier de résine et est notamment constitué de ce mortier de résine. Ce mortier de résine est dépourvu de ciment minéral et d'eau.

Le tuyau 2 comprend en outre une première 18 et une seconde 20 butées. En l'occurrence, chaque butée 18, 20 comprend un cordon annulaire disposé sur la surface intérieure 14, et de préférence un cordon de polymère formé par exemple de colle durcie. La première butée 18 est disposée à l'extrémité axiale du bout uni 4, et la seconde butée 20 est disposée à l'extrémité axiale de la partie intermédiaire 8 et est disposée adjacente au bout à emboîtement 6. Lors de l'application du mortier de résine à l'état liquide ou visqueux sur la surface intérieure 14 du tuyau 2, la première butée 18 s'oppose à l'écoulement du mortier de résine en dehors du bout uni 4 tandis que la seconde butée 20 empêche l'écoulement du mortier de résine vers la surface intérieure du bout à emboîtement 6.

De préférence, la hauteur radiale h de chaque butée 18 ,20 est égale ou supérieure à l'épaisseur de paroi e du revêtement intérieur 16, et ceci sur toute la longueur circonférentielle de la butée.

Le mortier de résine du revêtement intérieur 16 a une composition spécifique afin d'être facile à appliquer tout en résistant à des effluents agressifs. Le mortier de résine est constitué d'une charge minérale et d'un liant organique.

La charge minérale comprend un premier sous-composant de charge et un second sous-composant de charge. En particulier, la charge est constituée de ces deux sous-composants.

Avantageusement, ces deux sous-composants de charge ont des granulométries différentes. De préférence, le premier sous-composant de charge a une granulométrie inférieure à 4 mm, et le second sous-composant de charge a une granulométrie inférieure à 0,4 mm. Le terme granulométrie est utilisé en application de la norme française XP P 18-545. Le premier sous-composant de charge est donc un sable sec grossier, tandis que le second sous-composant de charge est un sable sec fin.

Par ailleurs, le premier sous-composant de charge constitue entre 60% et 90% en poids de la charge minérale, tandis que le second sous-composant de charge constitue entre 40% et 10% en poids de la charge minérale.

La charge minérale comprend de préférence du sable siliceux sec ou silico-calcaire sec. Au moins l'un des deux sous-composants de charge est constitué de sable siliceux sec ou silico-calcaire sec. De préférence, chacun des deux sous-composants de charge est constitué d'un tel sable.

Le liant organique comprend avantageusement une résine polyépoxyde, notamment sans solvant, ou est constitué d'une telle résine polyépoxyde. Cette résine polyépoxyde est constituée d'un sous-composant époxyde et d'un sous-composant durcisseur. Avantageusement, le sous-composant époxyde et le sous-composant durcisseur ont un rapport en poids qui est compris entre 100/30 et 100/60, et de préférence entre 100/40 et 100/55.

Alternativement, le liant organique comprend une résine polyuréthane, ou est constitué d'une telle résine polyuréthane, qui est constituée d'un sous-composant polyol et d'un sous-composant isocyanate. Le rapport en poids entre le polyol et l'isocyanate est compris entre 100/70 et 100/100, et de préférence entre 100/80 et 100/90.

Avantageusement, le rapport en poids entre la charge minérale et le liant organique est compris entre 4/1 et 7,5/1.

Le mortier de résine selon l'invention est particulièrement facile à appliquer sur la surface du corps de base 10, et résiste bien aux effluents agressifs. En particulier, il permet le transport d'effluents ayant un pH compris entre 4 et 13 et pouvant ponctuellement être inférieur à 4.

Aussi, à l'état non durci, le mortier de résine utilisé dans le procédé selon l'invention est relativement visqueux et a donc peu tendance à s'écouler en dehors du corps de base 10. De ce fait, peu de mortier de résine est perdu lors de son application sur la surface intérieure 14 du tuyau 2.

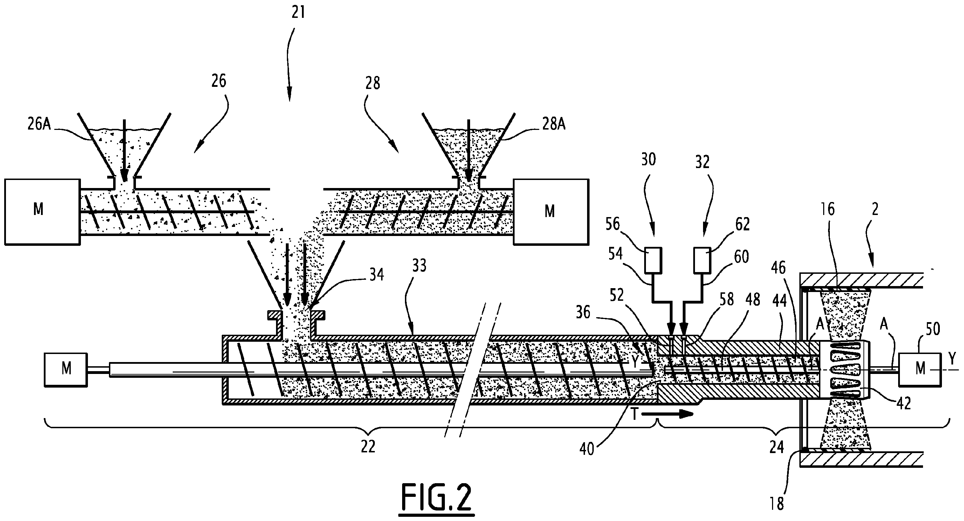

Sur la figure 2 est représentée schématiquement une installation 21 adaptée pour appliquer le revêtement intérieur 16 sur le corps de base 10 d'un tuyau 2 tel que décrit ci-dessus.

L'installation 21 comprend un dispositif d'acheminement 22 adapté pour acheminer la charge minérale. L'installation 21 comprend en outre un dispositif de mélange et de projection 24. Par ailleurs, l'installation 21 est munie d'un premier dispositif d'introduction 26, ainsi que d'un deuxième dispositif d'introduction 28. L'installation 21 est en outre munie d'un troisième dispositif d'introduction 30 et d'un quatrième dispositif d'introduction 32.

Le dispositif d'acheminement 22 est adapté pour acheminer la charge minérale et comprend une enceinte 33 munie d'une entrée 34 et d'une sortie 36. Le dispositif d'acheminement 22 constitue également un dispositif de mélange adapté pour mélanger le premier sous-composant de charge et le deuxième sous-composant de charge. En l'occurrence, le dispositif d'acheminement 22 est un convoyeur à vis.

Le premier dispositif d'introduction 26 est adapté pour introduire le premier sous-composant de charge dans l'entrée 34. Le deuxième dispositif d'introduction 28 est adapté pour introduire le deuxième sous-composant de charge dans l'entrée 34.

Le premier dispositif d'introduction 26 est un doseur à vis et comporte un réservoir d'entrée 26A contenant le premier sous-composant de charge. Le deuxième dispositif d'introduction 28 est un doseur à vis, et comporte un réservoir d'entrée 28A contenant le deuxième sous-composant de charge.

Le dispositif de mélange et de projection 24 comporte une entrée de charge 40, qui est disposée en aval de la sortie 36, et une sortie sous forme d'une tête de projection 42. Le dispositif de mélange et de projection 24 est muni d'un carter 44 formant une chambre de mélange 46 s'étendant de l'entrée de charge 40 à la tête de projection 42. Le dispositif de mélange et de projection 24 est également muni d'une vis de transport et de mélange 48 disposée dans la chambre de mélange 46.

Le dispositif de mélange et de projection 24 définit un axe central Y-Y, qui est l'axe central de la chambre 46. Le dispositif de mélange et de projection 24 définit également un sens de transport T dirigé parallèlement à l'axe Y-Y et dirigé de l'entrée de charge 40 vers la tête de projection 42.

Le dispositif de mélange et de projection 24 est muni de moyens d'entraînement en rotation de la tête de projection 42 et de la vis de transport et de mélange 48 par rapport au carter 44, sous forme d'un moteur 50. D'une manière préférentielle, la tête de projection 42 et la vis de transport et de mélange 48 sont solidaires en rotation. Ainsi, la tête de projection 42 et la vis 48 sont entraînées par le même moteur 50.

Le troisième dispositif d'introduction 30 est adapté pour introduire le premier sous-composant du liant organique dans la charge.

Le troisième dispositif d'introduction 30 comporte un canal d'introduction 52 débouchant dans la chambre de mélange 46. Le canal d'introduction 52 débouche dans la chambre de mélange 46 à un emplacement qui est situé en aval de l'entrée 40, en considérant le sens de transport T. Ce canal d'introduction 52 est disposé radialement par rapport à l'axe central Y-Y, de telle sorte que le premier sous-composant du liant est introduit radialement dans la chambre de mélange 46.

Le troisième dispositif d'introduction 30 comporte par ailleurs une conduite 54 et un dispositif doseur 56. Le dispositif doseur 56 est relié par la conduite 54 au canal d'introduction 52. Aussi, le dispositif doseur 56 comporte un réservoir contenant le premier sous-composant du liant organique.

Le quatrième dispositif d'introduction 32 comporte un canal d'introduction 58 débouchant dans la chambre de mélange 46. Le canal d'introduction 58 débouche dans la chambre de mélange 46 à un emplacement qui est situé en aval de l'emplacement où le canal d'introduction 52 débouche dans la chambre de mélange 46, en considérant le sens de transport T.

Le quatrième dispositif d'introduction 32 comporte en outre une conduite 60 et un dispositif doseur 62. Le dispositif doseur 62 est relié par la conduite 60 au canal d'introduction 58. Aussi, le dispositif doseur 62 comporte un réservoir contenant le second sous-composant du liant organique.

Le canal d'introduction 52 et la conduite 54 sont séparés sur toute leur longueur du canal d'introduction 58 et de la conduite 60.

D'une manière générale, les dispositifs d'introduction 30, 32 sont adaptés pour introduire les deux sous-composants du liant organique séparément l'un de l'autre dans la chambre de mélange 46. A cet effet, le canal d'introduction 58 débouche dans la chambre de mélange 46 espacé du canal d'introduction 52.

Le mélange d'époxyde et de durcisseur, dans le cas d'un liant constitué d'une résine polyépoxyde, ou le mélange du polyol et de l'isocyanate dans le cas d'un liant constitué d'une résine polyuréthane, est donc effectué exclusivement dans la chambre de mélange 46 et non pas en amont de celle-ci. En conséquence, seule la chambre de mélange 46 doit être nettoyée lorsque l'installation est mise à l'arrêt et peu de liant organique est donc perdu.

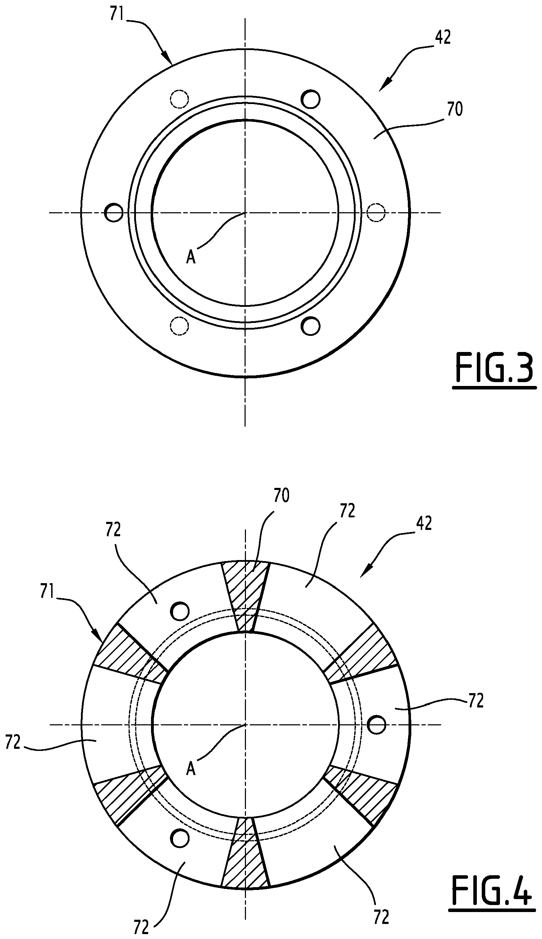

Afin que le mortier de résine utilisé dans le procédé l'invention puisse être appliqué d'une manière satisfaisante sur la surface intérieure du tuyau, la tête de projection 42 a une conception particulière. Les figures 3 et 4 montrent un premier mode de réalisation de cette tête 42.

Comme ceci est visible sur les figures 3 et 4, la tête de projection 42 comprend un corps de base 70. Le corps de base 70 est par exemple en forme de cylindre creux et s'étend selon un axe central de tête A-A. Le corps de base 70 a une surface d'enveloppe 71. La tête de projection 42 comporte une multitude de fenêtres de projection 72 ménagées dans le corps de base 70. Dans le cas présent, la tête de projection 42 comporte six fenêtres de projection 72. Chaque fenêtre de projection 72 est une ouverture radialement traversante du corps de base 70 par rapport à l'axe central de tête A-A.

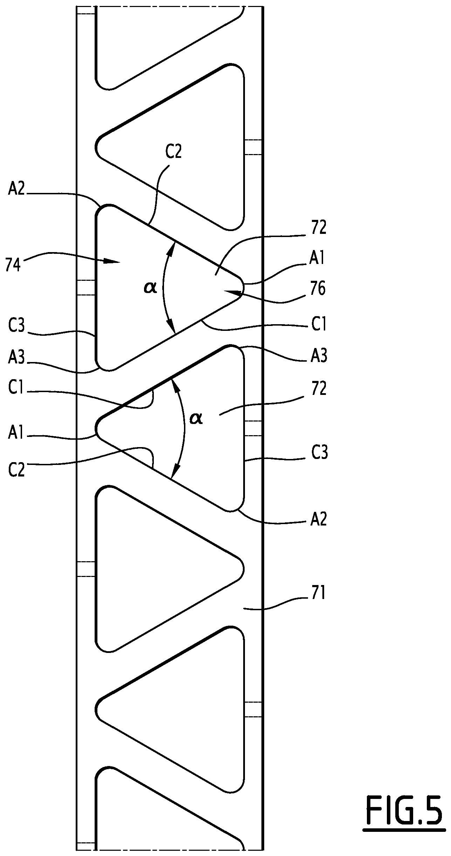

La figure 5 montre la surface d'enveloppe 71 déroulée sur le plan de la figure 5. Chaque fenêtre de projection 72 a une forme sensiblement triangulaire à coins arrondis. Chaque fenêtre de projection 72 a trois côtés, C1, C2, C3. A chaque fois, deux côtés C1-C2, C2-C3 et C3-C1 sont reliés par une partie en arc de cercle A1, A2, A3. Chaque fenêtre de projection 72 comporte une portion axiale large 74 et une portion axiale mince 76. La portion axiale large 74 est, par rapport à l'axe A-A, circonférentiellement plus large que la portion axiale mince 76.

Les fenêtres de projection 72 sont disposées autour de l'axe central A-A de telle sorte que les portions axiales larges 74 et les portions axiales minces 76 alternent selon la direction circonférentielle autour de l'axe central de tête A-A.

Chaque fenêtre de projection 72 forme donc une base, constituée par la portion axiale large 74, et un sommet, constitué par la portion axiale mince 76. Les côtés C1, C2 associés au sommet forment un angle de sommet α entre eux. Cet angle α est compris entre 5° et 60°. Dans l'exemple montré sur la figure 5, l'angle de sommet α est de 60°, et les fenêtres de projection 72 ont une forme de triangle équilatéral.

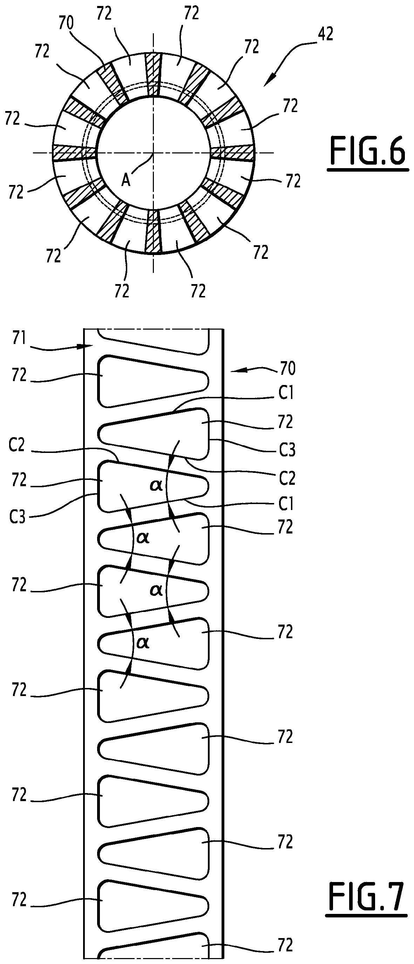

Les figures 6 et 7 montrent un deuxième mode de réalisation d'une tête de projection 72. La différence par rapport au premier mode de réalisation est le nombre des fenêtres de projection 72, qui sont dans ce cas douze. De plus, l'angle de sommet α est de 20° et les fenêtres de projection 72 ont une forme générale de triangle isocèle.

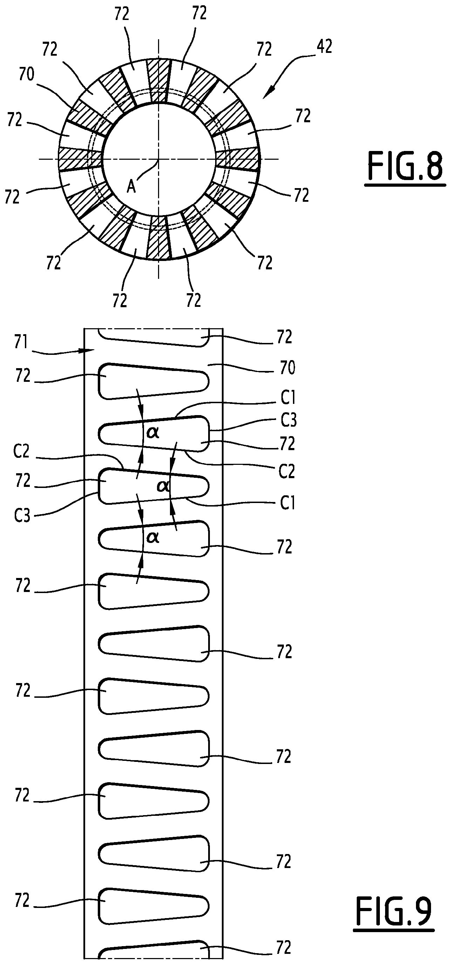

Les figures 8 et 9 montrent un troisième mode de réalisation d'une tête de projection 42. La seule différence par rapport au deuxième mode de réalisation est l'angle de sommet α qui est ici de 10°.

De manière générale, les fenêtres de projection 72 ont au moins deux côtés non parallèles. En variante, chaque fenêtre de projection 72 peut également avoir une forme générale quadrilatère, par exemple de trapèze.

Par la suite sera décrit un procédé d'application d'un revêtement intérieur 16 sur le corps de base 10 d'un tuyau 2 selon l'invention en utilisant l'installation 21 de la figure 2..

Pendant une première étape, le premier sous-composant de charge et le deuxième sous-composant de charge sont introduits séparément dans l'entrée 34 de l'enceinte 33. Les deux sous-composants de charge sont mélangés et acheminés par le dispositif d'acheminement 22 vers la sortie 36. Ainsi, une charge minérale homogène est obtenue au niveau de la sortie 36.

La charge minérale est alors introduite dans l'entrée 40 du dispositif de mélange et de projection 24 et est acheminée par la vis 48 selon le sens de transport T, la vis 48 et la tête de projection 42 étant entraînées en rotation par le moteur 50.

Pendant une deuxième étape, le premier sous-composant du liant organique et le deuxième sous-composant du liant organique sont introduits radialement par rapport au sens de transport T dans la charge minérale, à l'intérieur de la chambre de mélange 46. Cette introduction du premier sous-composant du liant organique dans la charge est effectuée séparément de l'introduction du second sous-composant du liant organique dans la charge.

Pendant une troisième étape, les sous-composants du liant organique et les sous-composants de charge minérale sont mélangés par la vis 48 dans la chambre de mélange 46 et forment un mortier de résine homogène qui est acheminé dans la tête de projection 42. La tête 42 étant entraînée en rotation par le moteur 50, le mortier de résine est alors projeté sur la surface intérieure du tuyau 2 à travers les fenêtres de projection 72.

Pendant la projection, le tuyau 2 est entraîné en rotation autour de son axe X-X suivant un sens de rotation identique à celui de la tête de projection mais à une vitesse de rotation inférieure à celle de la tête de projection, et la tête de projection 42 est déplacée axialement à l'intérieur et le long du tuyau 2.

Une fois que toute la partie de la surface intérieure 14 devant être revêtue est couverte par le mortier de résine et tant que celui-ci est à l'état liquide ou visqueux, la vitesse de rotation du tuyau 2 autour se son axe X-X est augmentée afin de lisser la surface libre du revêtement 16 de mortier de résine. L'accélération produite lors de l'élévation de la vitesse de rotation du tuyau est comprise entre 50 et 100 fois l'accélération normale de la pesanteur terrestre.

En variante, le mortier de résine selon l'invention peut également comprendre des fibres de renforcement de type organiques, minérales ou métalliques, et ce dans une proportion comprise entre 0,5% et 10% en poids par rapport au poids du liant organique. De préférence, les fibres de renforcement sont alors mélangées à la charge minérale avant introduction de celle-ci dans le dispositif d'acheminement 22.

En variante, au moins l'un des canaux d'introduction 52, 58 est disposé selon une direction ayant une composante radiale ou une composante perpendiculaire au sens de transport T, mais qui n'est pas strictement radiale ou perpendiculaire. Ainsi, l'introduction du premier et/ou du second sous-composant du liant organique est effectué selon une direction ayant une composante perpendiculaire au sens de transport T.

En variante, la charge minérale peut comprendre un seul sous-composant de charge, notamment un sable de granulométrie inférieure à 4mm.

On notera que, de préférence, le premier sous-composant de charge ou l'unique sous-composant de charge a une granulométrie comprise entre 10 µm et 1 mm et est constitué de sable siliceux sec ou silico-calcaire sec.

Dans l'exemple donné ci-dessus où la charge minérale est constituée de deux sables de granulométries distinctes, le rapport en poids entre la charge minérale et le liant organique est compris entre 4/1 et 7,5/1. Cependant, lorsque la charge est constituée d'un seul sable de granulométrie comprise entre 10 µm et 1 mm, le rapport en poids entre la charge minérale et le liant organique est alors compris entre 1,5/1 et 4/1 et de préférence entre 2/1 et 3/1.

## Revendications

1. Procédé de revêtement de l'intérieur d'un élément de canalisation, l'élément de canalisation s'étendant suivant un axe central (X-X) et comprenant un corps de base (10) en métal, définissant une surface extérieure (12) de corps de base et une surface intérieure (14) de corps de base, de manière à former un revêtement intérieur (16) appliqué sur la surface intérieure (14) de corps de base, le revêtement intérieur (16) étant constitué d'un mortier de résine et comprenant une charge minérale et un liant organique, **caractérisé en ce que** le procédé comprend les étapes suivantes :
a) acheminement de la charge minérale, le cas échéant mélangée à des fibres de renforcement, selon un sens de transport (T) et introduction du liant organique ou de premier et second sous-composants du liant organique dans la charge suivant une direction ayant une composante perpendiculaire au sens de transport (T), et notamment suivant une direction perpendiculaire à ce sens de transport (T),
b) mélange du liant organique et de la charge minérale, et le cas échéant des fibres de renforcement, en formant un mortier de résine,
c) projection du mortier de résine sur la surface intérieure (14) du corps de base (10) de l'élément de canalisation.

2. Procédé de revêtement selon la revendication 1, **caractérisé en ce que** le corps de base (10) est en fonte, en particulier en fonte à graphite sphéroïdal.

3. Procédé de revêtement selon l'une quelconque des revendications 1 ou 2, **caractérisé en ce que** la charge minérale comprend au moins un premier sous-composant de charge, et est notamment constituée de ce premier sous-composant de charge.

4. Procédé de revêtement selon la revendication 3, **caractérisé en ce que** la charge minérale est constituée du premier sous-composant de charge et d'un second sous-composant de charge, ces deux sous-composants de charge ayant des granulométries différentes.

5. Procédé de revêtement selon la revendication 3 ou 4, **caractérisé en ce que** le premier sous-composant de charge a une granulométrie inférieure à 4 mm, notamment comprise entre 10 µm et 1 mm.

6. Procédé de revêtement selon au moins la revendication 4, **caractérisé en ce que** le premier sous-composant de charge constitue entre 60% et 90% en poids de la charge minérale, et le second sous-composant de charge constitue entre 40% et 10% en poids de la charge minérale.

7. Procédé de revêtement selon l'une quelconque des revendications 1 à 6, **caractérisé en ce que** la charge minérale comprend du sable siliceux sec ou silico-calcaire sec, et notamment au moins l'un des sous-composants de charge est constitué de sable siliceux sec ou silico-calcaire sec.

8. Procédé de revêtement selon l'une quelconque des revendications 1 à 7, **caractérisé en ce que** le liant organique comprend et est notamment constitué d'une résine polyépoxyde ou polyuréthane.

9. Procédé de revêtement selon la revendication 8, **caractérisé en ce que** le liant organique comprend et est notamment constitué d'une résine polyépoxyde, notamment sans solvant, et **en ce que** la résine polyépoxyde est constituée d'un sous-composant époxyde et d'un sous-composant durcisseur.

10. Procédé de revêtement selon la revendication 9, **caractérisé en ce que** le rapport en poids entre le sous-composant époxyde et le sous-composant durcisseur, à savoir époxyde/durcisseur est compris entre 100/30 et 100/60.

11. Procédé de revêtement selon la revendication 8, **caractérisé en ce que** le liant organique comprend et est notamment constitué d'une résine polyuréthane qui est constituée d'un polyol et d'un isocyanate, notamment avec un rapport en poids entre le polyol et l'isocyanate qui est compris entre 100/70 et 100/100.

12. Procédé de revêtement selon l'une quelconque des revendications précédentes, **caractérisé en ce que** le rapport en poids entre la charge minérale et le liant organique est compris entre 4/1 et 7,5/1, ou est compris entre 1,5/1 et 4/1 et de préférence entre 2/1 et 3/1.

13. Procédé de revêtement selon l'une quelconque des revendications précédentes, **caractérisé en ce que** le mortier de résine est constitué d'une charge minérale et d'un liant organique.

14. Procédé de revêtement selon l'une quelconque des revendications 1 à 12, **caractérisé en ce que** le mortier de résine comporte des fibres de renforcement dans une proportion comprise entre 0,5% et 10% en poids par rapport au liant organique.

15. Procédé de revêtement selon l'une quelconque des revendications précédentes, **caractérisé en ce qu'**il comprend une butée (18, 20) adaptée pour s'opposer à un écoulement axial du mortier de résine disposé sur la surface intérieure (14).

16. Procédé de revêtement selon la revendication 15, **caractérisé en ce que** la butée (18, 20) comprend un cordon annulaire disposé sur la surface intérieure, notamment un cordon de colle durcie.

17. Procédé de revêtement selon l'une quelconque des revendications précédentes, **caractérisé en ce que** le revêtement intérieur (16) a une épaisseur de paroi (e) comprise entre 2 mm et 4 mm, notamment sur toute son étendue.

18. Procédé de revêtement selon l'une quelconque des revendications précédentes, comprenant en outre l'étape d'introduire le premier sous-composant du liant organique dans la charge minérale séparément de l'introduction du deuxième sous-composant du liant organique dans la charge minérale, avant leur mélange.

19. Procédé de revêtement selon la revendication 18, comprenant en outre l'étape de mélanger un premier sous-composant de charge et un second sous-composant de charge en obtenant la charge minérale.

20. Procédé de revêtement selon l'une quelconque des revendications précédentes, dans lequel l'acheminement de la charge minérale s'effectue, au cours d'une première phase, dans un dispositif d'acheminement (22) formant un convoyeur à vis et comprenant une enceinte (33) munie d'une entrée (34) et d'une sortie (36) et, au cours d'une deuxième phase, dans un dispositif de mélange et de projection (24) comportant une entrée de charge (40) qui est disposée en aval de la sortie (36) du dispositif d'acheminement (22), une sortie sous forme d'une tête de projection (42), une chambre de mélange (46) s'étendant de l'entrée de charge (40) à la tête de projection (42), et une vis de transport et de mélange (48) disposée dans la chambre de mélange (46), l'introduction du liant organique et le mélange avec la charge s'effectuant à l'intérieur de ladite chambre de mélange (46).

21. Procédé de revêtement selon la revendication 20, dans lequel la projection du mortier de résine s'effectue au moyen de la tête de projection (42), ladite tête de projection (42) étant entraînée en rotation par des moyens d'entraînement dont est muni le dispositif de mélange et de projection (24).

22. Procédé de revêtement selon la revendication 20 ou 21, dans lequel la vis du dispositif d'acheminement (22) est dissociée de la vis de transport et de mélange (48) du dispositif de mélange et de projection (24), chaque vis étant entraînée en rotation par un moteur (M) distinct et celui entraînant la vis de transport et de mélange (48) entraînant également en rotation la tête de projection (42).

## Patentansprüche

1. Verfahren zum Beschichten des Inneren eines Kanalisationselements, wobei das Kanalisationselement sich entlang einer zentralen Achse (X-X) erstreckt und einen Grundkörper (10) aus Metall aufweist, definierend eine Außenfläche (12) des Grundkörpers und eine Innenfläche (14) des Grundkörpers, um eine Innenbeschichtung (16) zu bilden, die auf die Innenfläche (14) des Grundkörpers aufgebracht ist, wobei die Innenbeschichtung (16) aus einer Harzmasse gebildet ist und aufweist eine mineralische Charge und einen organischen Binder, **dadurch gekennzeichnet, dass** das Verfahren die folgenden Schritte aufweist:
a) Fördern der mineralischen Charge, die gegebenenfalls gemischt ist mit Verstärkungsfasern, entlang einer Transportrichtung (T) und Einbringen des organischen Binders oder einer ersten und einer zweiten Unterkomponente des organischen Binders in die Charge entlang einer Richtung die eine Komponente senkrecht zu der Transportrichtung (T) hat und insbesondere entlang einer Richtung senkrecht zu dieser Transportrichtung (T),
b) Vermischen des organischen Binders und der mineralischen Charge, und gegebenenfalls der Verstärkungsfasern, unter Bilden einer Harzmasse,
c) Spritzen der Harzmasse auf die Innenfläche (14) des Grundkörpers (10) des Kanalisationselements.

2. Verfahren zum Beschichten gemäß Anspruch 1, **dadurch gekennzeichnet, dass** der Grundkörper (10) aus Gusseisen ist, insbesondere aus Kugelgraphit-Guss.

3. Verfahren zum Beschichten gemäß irgendeinem der Ansprüche 1 oder 2, **dadurch gekennzeichnet, dass** die mineralische Charge wenigstens eine erste Charge-Unterkomponente aufweist und insbesondere aus dieser ersten Charge-Unterkomponente gebildet ist.

4. Verfahren zum Beschichten gemäß Anspruch 3, **dadurch gekennzeichnet, dass** die mineralische Charge gebildet ist aus einer ersten Charge-Unterkomponente und einer zweiten Charge-Unterkomponente, wobei diese beiden Charge-Unterkomponenten unterschiedliche Korngrößen haben.

5. Verfahren zum Beschichten gemäß Anspruch 3 oder 4, **dadurch gekennzeichnet, dass** die erste Charge-Unterkomponente eine Korngröße hat, die kleiner als 4 mm ist, insbesondere zwischen 10 µm und 1 mm liegt.

6. Verfahren zum Beschichten gemäß zumindest Anspruch 4, **dadurch gekennzeichnet, dass** die erste Charge-Unterkomponente zwischen 60% und 90% in Gewicht von der mineralischen Charge bildet und die zweite Charge-Unterkomponente zwischen 40% und 10% in Gewicht von der mineralischen Charge bildet.

7. Verfahren zum Beschichten gemäß irgendeinem der Ansprüche 1 bis 6, **dadurch gekennzeichnet, dass** die mineralische Charge trockenen Kieselsand oder trockenen Kiesel-Kalk-Sand aufweist, wobei insbesondere wenigstens eine der Charge-Unterkomponenten von trockenem Kieselsand oder trockenem Kiesel-Kalk-Sand gebildet ist.

8. Verfahren zum Beschichten gemäß irgendeinem der Ansprüche 1 bis 7, **dadurch gekennzeichnet, dass** der organische Binder aufweist und insbesondere gebildet ist von einem Polyepoxid- oder Polyurethan-Harz.

9. Verfahren zum Beschichten gemäß Anspruch 8, **dadurch gekennzeichnet, dass** der organische Binder aufweist und insbesondere gebildet ist von einem Polyepoxid-Harz, insbesondere Lösungsmittel-frei, und dadurch, dass das Polyepoxid-Harz gebildet ist aus einer Epoxid-Unterkomponente und einer Härter-Unterkomponente.

10. Verfahren zum Beschichten gemäß Anspruch 9, **dadurch gekennzeichnet, dass** das Gewichts-Verhältnis zwischen der Epoxid-Unterkomponente und der Härter-Unterkomponente, sprich Epoxid/Härter zwischen 100/30 und 100/60 liegt.

11. Verfahren zum Beschichten gemäß Anspruch 8, **dadurch gekennzeichnet, dass** der organische Binder aufweist und insbesondere gebildet ist aus einem Polyurethan-Harz, das aus einem Polyol und einem Isocyanat gebildet ist, insbesondere mit einem Gewichts-Verhältnis zwischen dem Polyol und dem Isocyanat, das zwischen 100/70 und 100/100 liegt.

12. Verfahren zum Beschichten gemäß irgendeinem der vorhergehenden Ansprüche, **dadurch gekennzeichnet, dass** das Gewichts-Verhältnis zwischen der mineralischen Charge und dem organischen Binder zwischen 4/1 und 7,5/1 liegt oder zwischen 1,5/1 und 4/1 und bevorzugt zwischen 2/1 und 3/1 liegt.

13. Verfahren zum Beschichten gemäß irgendeinem der vorhergehenden Ansprüche, **dadurch gekennzeichnet, dass** die Harz-Masse gebildet ist von einer mineralischen Charge und einem organischen Binder.

14. Verfahren zum Beschichten gemäß irgendeinem der Ansprüche 1 bis 12, **dadurch gekennzeichnet, dass** die Harz-Masse Verstärkungsfasern aufweist in einem Anteil, der zwischen 0,5% und 10% in Gewicht bezüglich des organischen Binders liegt.

15. Verfahren zum Beschichten gemäß irgendeinem der vorhergehenden Ansprüche, **dadurch gekennzeichnet, dass** es aufweist einen Begrenzer (18, 20), der angepasst ist, um einem axialen Abfluss der Harz-Masse, die auf der Innenfläche (14) angeordnet ist, entgegenzuwirken.

16. Verfahren zum Beschichten gemäß Anspruch 15, **dadurch gekennzeichnet, dass** der Begrenzer (18, 20) ein Ring-Band aufweist, das an der Innenfläche angeordnet ist, insbesondere ein Band aus gehärtetem Kleber.

17. Verfahren zum Beschichten gemäß irgendeinem der vorhergehenden Ansprüche, **dadurch gekennzeichnet, dass** die Innenbeschichtung (16) eine Wanddicke (e), die zwischen 2 mm und 4 mm liegt, hat, insbesondere über ihre gesamte Erstreckung hinweg.

18. Verfahren zum Beschichten gemäß irgendeinem der vorhergehenden Ansprüche, ferner aufweisend den Schritt des Einbringens der ersten Unterkomponente des organischen Binders in die mineralische Charge separat von dem Einbringen der zweiten Unterkomponente des organischen Binders in die mineralische Charge vor deren Vermischen.

19. Verfahren zum Beschichten gemäß Anspruch 18, ferner aufweisend den Schritt des Vermischens einer ersten Charge-Unterkomponente und einer zweiten Charge-Unterkomponente unter Erlangen der mineralischen Charge.

20. Verfahren zum Beschichten gemäß irgendeinem der vorhergehenden Ansprüche, wobei das Fördern der mineralischen Charge erfolgt, im Laufe einer ersten Phase, in einer Fördervorrichtung (22), die einen Schnecken-Förderer bildet und aufweist ein Gehäuse (33), das mit einem Eingang (34) und einem Ausgang (36) versehen ist, und, im Laufe einer zweiten Phase, in einer Mischer-und-Spritz-Vorrichtung (24), die aufweist einen Charge-Eingang (40), der stromabwärts von dem Ausgang (36) der Fördervorrichtung (22) angeordnet ist, einen Ausgang in Form eines Spritzkopfs (42), eine Mischkammer (46), die sich von dem Charge-Eingang (40) zu dem Spitzkopf (42) erstreckt, und eine Förder-und-Mischer-Schnecke (48), die in der Mischkammer (46) angeordnet ist, wobei das Einbringen des organischen Binders und das Mischen mit der Charge im Inneren der besagten Mischkammer (46) erfolgt.

21. Verfahren zum Beschichten gemäß Anspruch 20, wobei das Spritzen der Harz-Masse mittels des Spritzkopfs (42) erfolgt, wobei der Spritzkopf (42) drehangetrieben wird mittels Antriebsmitteln, mit denen die Mischer-und-Spritz-Vorrichtung (24) ausgestattet ist.

22. Verfahren zum Beschichten gemäß Anspruch 20 oder 21, wobei die Schnecke der Fördervorrichtung (22) von der Förder-und-Mischer-Schnecke (48) der Mischer-und-Spritz-Vorrichtung (24) getrennt ist, wobei jede Schnecke drehangetrieben wird von einem unterschiedlichen Motor (M), wobei jener, der die Förder-und-Mischer-Schnecke (48) antreibt, auch den Spritzkopf (42) drehantreibt.

## Claims

1. A covering method for covering the interior of a section of pipe, the section of pipe extending along a central axis (X-X) and comprising a basic body (10) made of metal, defining a basic body external surface (12) and a basic body internal surface (14), so as to form an internal lining (16) applied to the basic body internal surface (14), the internal lining (16) consisting of a resin mortar and comprising a mineral filler and an organic binder, **characterized in that** the method comprises the following steps:
a) conveying the mineral filler, if applicable mixed with reinforcing fibers, in a transport direction (T) and introducing the organic binder or the first and second sub-components of the organic binder into the filler in a direction having a component perpendicular to the transport direction (T), and in particular in a direction perpendicular to that transport direction (T),
b) mixing the organic binder and the mineral filler, and if applicable reinforcing fibers, while forming a resin mortar,
c) projecting the resin mortar on the internal surface (14) of the basic body (10) of the section of pipe.

2. The covering method according to claim 1, **characterized in that** the basic body (10) is made from cast iron, in particular spheroidal-graphite cast iron.

3. The covering method according to any one of claims 1 or 2, **characterized in that** the mineral filler comprises at least one filler sub-component, and in particular consists of said filler sub-component.

4. The covering method according to claim 3, **characterized in that** the mineral filler consists of the first filler sub-component and a second filler sub-component, said two filler sub-components having different particle sizes.

5. The covering method according to claim 3 or 4, **characterized in that** the first filler sub-component has a particle size smaller than 4 mm, in particular between 10 µm and 1 mm.

6. The covering method according to at least claim 4, **characterized in that** the first filler sub-component makes up between 60% and 90% by weight of the mineral filler, and the second filler sub-component makes up between 40% and 10% by weight of the mineral filler.

7. The covering method according to any one of claims 1 to 6, **characterized in that** the mineral filler comprises dry silicate sand or dry sand lime, and in particular at least one of the filler sub-components consists of dry silicate sand or dry sand lime.

8. The covering method according to any one of claims 1 to 7, **characterized in that** the organic binder comprises and in particular consists of a polyepoxide or polyurethane resin.

9. The covering method according to claim 8, **characterized in that** the organic binder comprises and in particular consists of a polyepoxide resin, in particular without solvent, and the polyepoxide resin consists of an epoxide sub-component and a hardening agent sub-component.

10. The covering method according to claim 9, **characterized in that** the weight ratio between the epoxide sub-component and the hardening agent sub-component, i.e. epoxide/hardening agent, is between 100/30 and 100/60.

11. The covering method according to claim 8, **characterized in that** the organic binder comprises and in particular consists of a polyurethane resin that consists of a polyol and an isocyanate, in particular with a weight ratio between the polyol and the isocyanate comprised between 100/70 and 100/100.

12. The covering method according to any one of the preceding claims, **characterized in that** the weight ratio between the mineral filler and the organic binder is comprised between 4/1 and 7.5/1, or is comprised between 1.5/1 and 4/1 and preferably between 2/1 and 3/1.

13. The covering method according to any one of the preceding claims, **characterized in that** the resin mortar consists of a mineral filler and an organic binder.

14. The covering method according to any one of claims 1 to 12, **characterized in that** the resin mortar includes reinforcing fibers in a proportion comprised between 0.5% and 10% by weight in relation to the organic binder.

15. The covering method according to any one of the preceding claims, **characterized in that** it comprises a stop (18, 20) adapted to oppose an axial flow of the resin mortar arranged on the inner surface (14).

16. The covering method according to claim 15, **characterized in that** the stop (18, 20) comprises an annular cord arranged on the internal surface, in particular a cord of hardened adhesive.

17. The covering method according to any one of the preceding claims, **characterized in that** the internal lining (16) has a wall thickness (e) between 2 mm and 4 mm, in particular over its entire expanse.

18. The covering method according to any one of the preceding claims, also comprising a step for introducing the first sub-component of the organic binder into the mineral filler separately from the introduction of the second sub-component of the organic binder in the mineral filler, before mixing thereof.

19. The covering method according to claim 18, also comprising a step for mixing a first filler sub-component and a second filler sub-component while obtaining the mineral filler.

20. The covering method according to any one of the preceding claims, wherein conveying of the mineral filler is carried out, during a first phase, in a conveyor device (22) forming a screw conveyor and comprising an enclosure (33) provided with an inlet (34) and a an outlet (36) and, in a second phase, in a mixing and projecting device (24) having a filler inlet (40) which is disposed downstream of the outlet (36) of the conveying device (22), an output in the form of a projection head (42), a mixing chamber (46) extending from the filler inlet (40) to the projection head (42), and a transport and mixing screw (48) arranged in the mixing chamber (46), introduction of the organic binder and mixing with the filler being effected within said mixing chamber (46).

21. The covering method according to claim 20, wherein projection of the resin mortar is effected by means of the projection head (42), said projection head (42) being rotated by drive means with which the mixing and projection device (24) is provided.

22. The covering method according to claim 20 or 21, wherein the screw of the conveying device (22) is dissociated from the transport and mixing screw (48) of the mixing and projecting device (24), each screw being rotated by a different motor (M) and the one that rotates the transport and mixing screw (48) rotating also the projection head (42).
